# EUROPEAN PATENT SPECIFICATION

(11) **EP 1 403 667 B1**
(45) Date of publication and mention of the grant of the patent: **09.04.2008**
(21) Application number: 03021496.9
(22) Date of filing: 23.09.2003
(51) Int. Cl.: G02B 6/00

(54) **Illumination mechanism**
Beleuchtungsvorrichtung
Mécanisme d'illumination

(30) Priority: 27.09.2002 JP 2002283353
(43) Date of publication of application: 31.03.2004
(73) Proprietor: ALPS ELECTRIC CO., LTD., Tokyo 145-8501 (JP)
(72) Inventor: Kawano, Kenji, c/o Alps Electric Co., LTD., Tokyo 145-8501 (JP)
(74) Representative: Klunker . Schmitt-Nilson . Hirsch

(56) References cited:
- DE-A- 2 029 317
- DE-C- 561 922

## Description

### BACKGROUND OF THE INVENTION

### 1. Field of the Invention

The present invention relates to an illumination mechanism for guiding the light of a light source to an illumination region by a light guide incorporated in an operation panel or the like, and more specifically, it relates to an illumination mechanism ideally used with an apparatus having a plurality of illumination regions of different illumination colors.

### 2. Description of the Related Art

An in-car operation panel is provided with an illumination mechanism for allowing an operation unit and its vicinity to be illuminated by the light of a built-in light source so as to secure visibility in a dark place at night or the like. Such an illumination mechanism usually uses a light source, such as a lamp or an LED, and also a light guide for guiding the light of the light source to a predetermined illumination region.

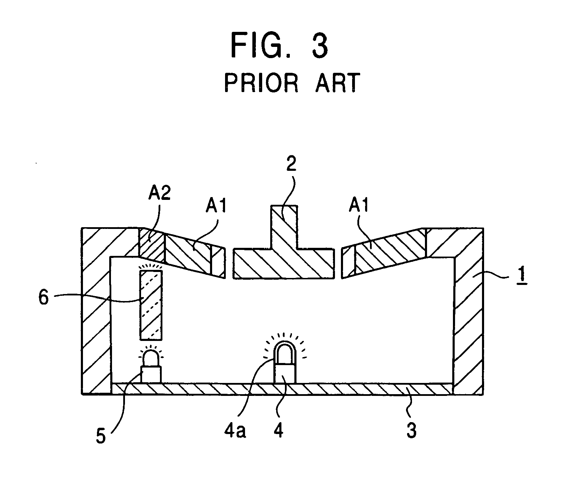

Fig. 3 is a schematic representation showing an example of a conventional illumination mechanism. In the drawing, a panel member 1 has illumination regions A1 and A2 around a control knob 2. These illumination regions A1 and A2 are formed by providing a colorless transparent region with color printing. The relatively large illumination region A1 surrounding the control knob 2 is colored with a first illumination color (e.g., yellowish orange color), and the illumination region A2, which is smaller than the former, is colored with a second illumination color (e.g., blue color). Mounted on a circuit board 3 incorporated in the panel member 1 are a light source 4 positioned behind the control knob 2 and a light source 5 positioned behind the illumination region A2, which are arranged side by side. A colorless transparent columnar light guide 6 is provided between the light source 5 and the illumination region A2. The light guide 6 is made of a light transmitting material, such as an acrylic resin, which efficiently guides white light emitted from the light source 5 to the illumination region A2, so that the illumination region A2 can be illuminated by the second illumination color reflecting the printed color. The light source 4 is equipped with a toning cap 4a, so that the white light emitted from the light source 4 is changed into the color close to the first illumination color after passing through the toning cap 4a, then radiated to the illumination region A1. Accordingly, the illumination region A1 can be illuminated by the first illumination light providing the primary illumination color.

If the illumination colors of the illumination regions A1 and A2 are substantially similar colors, then printed colors make it possible to distinguish the light of the same color irradiated from behind. Actually, however, the illumination colors are frequently set to the ones that allow the two illumination regions A1 and A2 to be clearly distinguished (for example, one is set to a warm color, while the other is set to a cold color). Hence, a construction wherein light rays of different colors are irradiated from behind the illumination regions A1 and A2, as shown in Fig. 3, has been extensively used.

As described above, if the light of the same color cannot be irradiated to a plurality of illumination regions A1 and A2 from behind, then the light sources 4 and 5 have conventionally been provided for the illumination regions A1 and A2, respectively, and the toning cap 4a and the light guide 6 have also been provided, as shown in Fig. 3. Such a construction, however, has been posing a problem in that it includes additional components, inevitably leading to higher cost of the illumination mechanism.

### SUMMARY OF THE INVENTION

Accordingly, the object of the present invention is to provide an illumination mechanism capable of supplying illumination light rays of different colors to a plurality of illumination regions by using the same light source, thus permitting lower cost to be achieved.

To fulfill the object described above, an illumination mechanism in accordance with the present invention is provided with the features of claim 1.

The use of the light guide composed of the colored transparent light transmitting member and the colorless transparent light guiding member, which are closely bonded, makes it possible to considerably differentiate the illumination color for one illumination region irradiated by the light emitted from a light source, the color of which is changed as it passes through the colored transparent light transmitting member, from the illumination color for another illumination region irradiated by the light emitted from the light source and transmitted through the colorless transparent light guiding member. This allows the number of light sources of the illumination mechanism to be reduced and obviates the need for the toning cap.

In the aforesaid construction, the light guide is preferably fabricated by dichromatic molding techniques. Specifically, as a light transmitting material for the light transmitting member, one having a higher melting temperature than that for the second light guiding member is selected (e.g., a polycarbonate resin for the former, and an acrylic resin for the latter). By carrying out dichromatic molding that uses the light transmitting member, which has been molded in advance, as a part of the metal mold for the light guiding member, the light guide composed of these two members formed into one piece can be easily d fabricated.

In the light guide, it is preferable that the light transmitting member is chromatic and transparent, while the light guiding member is colorless and transparent. Specifically, the colorless transparent light guiding member has higher light transmittance, so that the light of the light source that is incident upon one end surface of the light guiding member is efficiently led to the other end surface even if an optical path is long. On the other hand, the colored transparent light transmitting member implements its toning function if the light of the light source incident upon its inner wall surface is made emergent through its outer wall surface along a short optical path. This arrangement eliminates the possibility of insufficient luminance of the illumination region illuminated by the light transmitting member.

In such a case, if the colorless transparent light guiding member has a covering portion for covering the outer surface of the colored transparent light transmitting member and a light guiding portion that projects from the covering portion, and if a laminate structure composed of the covering portion and the light transmitting member is provided with a notch for the communication between the inner space, wherein the light source is disposed, and the outer space, then members can be closely bonded in a large area. This arrangement is preferable, because mechanical strength is easily secured and the heat generated by the light source is easily released outside from the laminate structure, thus protecting the light guide from heat damage.

### BRIEF DESCRIPTION OF THE DRAWINGS

Fig. 1 is a cross-sectional view of an illumination mechanism in accordance with an embodiment of the present invention;
Fig. 2 is a perspective view of a light guide provided in the illumination mechanism; and
Fig. 3 is a cross-sectional view of an illumination mechanism in accordance with a conventional example.

### DESCRIPTION OF THE PREFERRED EMBODIMENTS

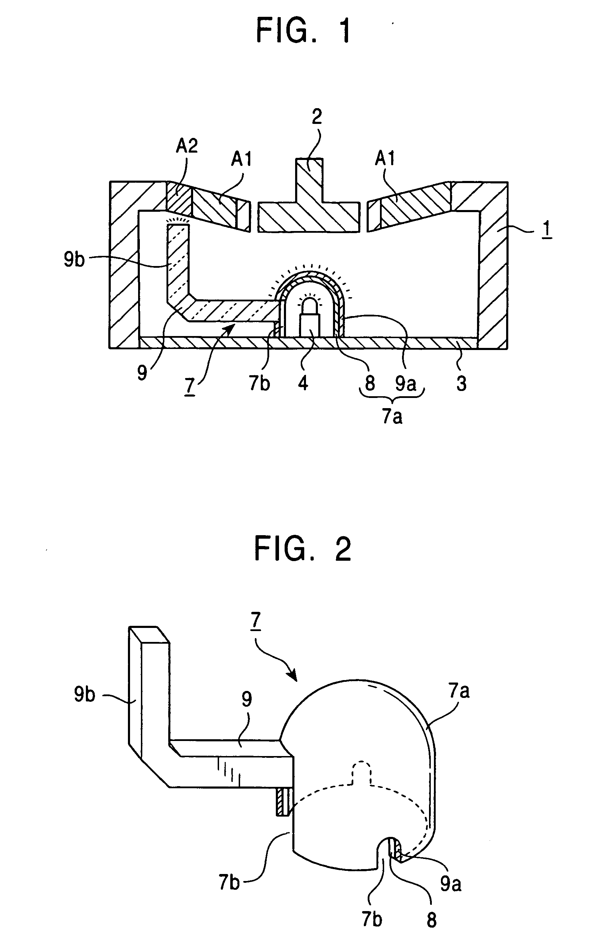

An embodiment of the present invention will be explained with reference to the accompanying drawings. Fig. 1 is a schematic representation of an illumination mechanism according to the embodiment of the present invention, and Fig. 2 is a perspective view of a light guide provided in the illumination mechanism. The components corresponding to those shown in Fig. 3 are assigned the same reference numerals.

In Figs. 1 and 2, reference numeral 7 denotes a light guide fabricated by dichroic molding techniques. The light guide 7 is constructed by closely bonding a light transmitting member 8 made of a polycarbonate resin dyed to a pale orange color by adding a pigment thereto and a colorless transparent light guiding member 9 made of an acrylic resin. The colored transparent light transmitting member 8 is a molded component formed substantially in a hemispherical shape, and disposed at the position where it covers a light source 4 to supply illumination light to an illumination region A1. The colorless transparent light guiding member 9 is a molded component formed of a substantially hemispherical covering portion 9a (first portion) for covering the outer surface of the light transmitting member 8 and a bar-shaped light guiding portion 9b bent substantially at right angles. The light guiding member 9 is disposed such that one end surface of the light guiding portion 9b opposes the light source 4 and the other end surface thereof opposes an illumination region A2, and it supplies illumination light to the illumination region A2. In other words, the light guide 7 may seemingly be divided into a substantially hemispherical laminate structure portion 7a in which the light transmitting member 8 and the covering portion 9a are closely bonded, and the L-shaped light guiding portion 9b that projects sideways from the laminate structure portion 7a and extends forward. Notches 7b for communication between the inner space and the outer space are provided at a plurality of locations of the laminate structure portion 7a.

The fabrication of the light guide 7 uses a dichroic molding technique in which the light transmitting member 8 is first molded, then the light transmitting member 8 is used as a part of the metal mold for molding the light guiding member 9. At this time, the polycarbonate resin, which is the material for the light transmitting member 8, has higher resistance to heat and does not melt at the melting temperature of the acrylic resin, which is the material for the light guiding member 9. Therefore, the light transmitting member 8 does not deform when molding the light guiding member 9. Thus, carrying out the dichroic molding technique produces the light guide 7 formed of the colored transparent light transmitting member 8 and the colorless transparent light guiding member 9 that are closely bonded into one-piece unit. The members 8 and 9, respectively, of the light guide 7 are tightly bonded with a large area so as to be securely formed into one piece.

Referring to Fig. 1, an illumination mechanism incorporating the light guide 7 has the illumination regions A1 and A2 around a control knob 2. These illumination regions A1 and A2 are formed by providing a colorless transparent region of a panel member 1 with color printing. The relatively large illumination region A1 surrounding the control knob 2 is colored with a first illumination color (yellowish orange color), and the illumination region A2, which is smaller than the illumination region A1, is colored to a second illumination color (blue color). Mounted on a circuit board 3 incorporated in the panel member 1 is a light source 4 disposed behind the control knob 2. The laminate structure portion 7a of the light guide 7 is disposed at the position where it covers the light source 4. Hence, the white light emitted from the light source 4 changes its color into a color close to that of the first illumination light after it passes through the pale orange light transmitting member 8, and this light passes through the colorless transparent covering portion 9a and illuminates the illumination region A1 from behind. This makes it possible to illuminate the illumination region A1 with the first illumination color, which is the primary illumination color. Furthermore, the light guiding portion 9b of the light guide 7 is disposed such that one end surface thereof faces against the light source 4, while the other end surface thereof faces against the illumination region A2, allowing the white light of the light source 4 to be directly guided to the illumination region A2 without causing its color to change. This makes it possible to illuminate the illumination region A2 with the second illumination color reflecting the printed color.

The colored transparent light transmitting member 8 implements its toning function by causing the light of the light source 4 incident upon its inner wall surface to exit through its outer wall surface along a shorter optical path. This arrangement eliminates the possibility of insufficient luminance of the illumination region A1 illuminated by the light transmitting member 8. Moreover, the colorless transparent light guiding member 9 has higher light transmittance, so that the light of the light source 4 that is incident upon one end surface of the light guiding portion 9b is efficiently led to the other end surface even if an optical path is long, thus eliminating the possibility of insufficient luminance of the illumination region A2.

As described above, this embodiment uses the light guide 7 composed of the colored transparent light transmitting member 8 and the colorless transparent light guiding member 9, which are tightly bonded. Hence, the illumination region A1 and the illumination region A2 having considerably different illumination light colors can be illuminated with the same light source 4, obviating the need for a toning cap. In addition, the light guide 7 can be easily fabricated by the dichroic molding technique. Thus, an illumination mechanism having a simpler construction due to the reduced number of components, including a light source and a toning cap, can be achieved, allowing markedly reduced cost to be expected.

Furthermore, in the light guide 7 used in the embodiment, the inner wall of the laminate structure portion 7a is constituted by the light transmitting member 8 made of a polycarbonate resin having high heat resistance, and the laminate structure portion 7a is provided with the notches 7b to easily release the heat from the light source 4 to the outside. This arrangement eliminates the possibility of damage to the light guide 7 by the heat from the light source 4, as compared with the conventional example in which the toning cap 4a is directly mounted on the light source 4 (refer to Fig. 3).

The light guide 7 used in this embodiment is provided with only one light guide portion 9b for guiding the light of the light source 4 to a predetermined illumination region. If, however, similar light guide portions are protuberantly or divergently formed at a plurality of locations, then it will be possible to distribute the light of the light source 4 to illumination regions at a plurality of locations by the light guiding member 9.

## Claims

1. An illumination mechanism for illuminating a first and a second region (A1, A2) comprising:
(a) a light source (4);
(b) a light transmitting member (8) formed of a clear material which is a chromatic filter, said light transmitting member (8) being shaped and arranged such as to cover said light source (4) so that light from said light source (4) propagating towards said first region (A1) to be illuminated is coloured; and
(c) a light guiding member (9) formed of a colourless and clear material, said light guiding member (9) being formed integrally of a first portion (9a) which is laminated and bonded to said light transmitting member (8) and a second portion (9b) which is a light guide having an input end and an output end, said second portion (9b) extending from said first portion (9a) in such a way that said input end is facing said light source (4) in direct optical coupling while said output end is facing said second region (A2) to be illuminated so that the colour of said light source (4) which is guided to said second region (A2) remains unchanged.

2. The illumination mechanism according to Claim 1, wherein the light transmitting material of the light transmitting member (8) has a higher melting temperature than that of the light transmitting material of the light guiding member (9), and the light transmitting member (8) and the light guiding member (9) are combined into one piece by performing dichromatic molding in which the light transmitting member (8) molded beforehand is used as a part of a metal mold for molding the light guiding member (9).

3. The illumination mechanism according to Claim 1 or 2, wherein a laminate structure (7a) formed of the first portion (9a) of the light guiding member covering the light transmitting member (8) and the light transmitting member (8) is provided with a notch (7b) for the communication between the inner space wherein the light source (4) is disposed and an outer space.

## Patentansprüche

1. Beleuchtungsmechanismus zum Beleuchten einer ersten und einer zweiten Region (A1, A2), aufweisend:
(a) eine Lichtquelle (4);
(b) ein Lichtübertragungselement (8) aus einem durchsichtigen Material, wobei es sich um ein chromatisches Filter handelt, wobei das Lichtübertragungselement (8) derart ausgebildet und angeordnet ist, dass es die Lichtquelle (4) überdeckt, so dass Licht von der Lichtquelle (4), das sich zu der zu beleuchtenden ersten Region (A1) hin fortpflanzt, farbig ist; und
(c) ein Lichtleitelement (9) aus einem farblosen und durchsichtigen Material, wobei das Lichtleitelement (9) in integraler Weise aus einem ersten Bereich (9a), der auf das Lichtübertragungselement (8) auflaminiert und mit diesem verbunden ist, sowie aus einem zweiten Bereich (9b) gebildet ist, bei dem es sich um einen Lichtleiter mit einem Eingangsende und einem Ausgangsende handelt, wobei der zweite Bereich (9b) sich von dem ersten Bereich (9a) derart weg erstreckt, dass das Eingangsende der Lichtquelle (4) in direkter optischer Kopplung zugewandt ist, während das Ausgangsende der zu beleuchtenden zweiten Region (A2) zugewandt ist, so dass die Farbe von der Lichtquelle (4), die zu der zweiten Region (A2) geleitet wird, unverändert bleibt.

2. Beleuchtungsmechanismus nach Anspruch 1,
wobei das Lichtübertragungsmaterial des Lichtübertragungselements (8) eine höhere Schmelzpunkttemperatur als das Lichtübertragungsmaterial des Lichtleitelements (9) aufweist und wobei das Lichtübertragungselement (8) und das Lichtleitelement (9) zu einem Stück kombiniert sind, indem ein dichromatischer Formvorgang ausgeführt wird, bei dem das vorab geformte Lichtübertragungselement (8) als Teil einer Metallform zum Formen des Lichtleitelements (9) verwendet wird.

3. Beleuchtungsmechanismus nach Anspruch 1 oder 2,
wobei eine Laminatstruktur (7a), die aus dem das Lichtübertragungselement (8) bedeckenden ersten Bereich (9) des Lichtleitelements und aus dem Lichtübertragungselement (8) gebildet ist, mit einer Aussparung (7b) versehen ist, um eine Verbindung zwischen dem Innenraum, in dem die Lichtquelle (4) angeordnet ist, und einem äußeren Raum zu schaffen.

## Revendications

1. Mécanisme d'éclairage pour éclairer une première et une deuxième région (A1, A2) comprenant :
(a) une source de lumière (4) ;
(b) un élément transmettant la lumière (8) fait d'un matériau clair qui est un filtre chromatique, ledit élément transmettant la lumière (8) ayant une forme et un agencement conçus pour couvrir ladite source de lumière (4) de manière telle que la lumière émanant de ladite source de lumière (4) et se propageant vers ladite première région (A1) à éclairer est colorée ; et
(c) un élément guidant la lumière (9) formé d'un matériau incolore et clair, ledit élément guidant la lumière (9) étant formé intégralement d'une première partie (9a) qui est stratifiée et collée audit élément transmettant la lumière (8) et d'une deuxième partie (9b) qui est un guide de lumière ayant une extrémité d'entrée et une extrémité de sortie, ladite deuxième partie (9b) s'étendant depuis ladite première partie (9a) de telle manière que ladite extrémité d'entrée fait face à ladite source de lumière (4) en couplage optique direct tandis que ladite extrémité de sortie fait face à la deuxième région (A2) à éclairer de telle façon que la couleur de ladite source de lumière (4) qui est guidée jusqu'à ladite deuxième région (A2) reste inchangée.

2. Mécanisme d'éclairage selon la revendication 1, dans lequel le matériau transmettant la lumière de l'élément transmettant la lumière (8) a une température de fusion plus élevée que celle du matériau transmettant la lumière de l'élément guidant la lumière (9), et l'élément transmettant la lumière (8) et l'élément guidant la lumière (9) sont combinés en un seul bloc en effectuant un moulage dichromatique dans lequel l'élément transmettant la lumière (8) moulé au préalable est utilisé comme partie d'un moule en métal pour mouler l'élément guidant la lumière (9).

3. Mécanisme d'éclairage selon la revendication 1 ou 2, dans lequel une structure stratifiée (7a) formée de la première partie (9a) de l'élément guidant la lumière couvrant l'élément transmettant la lumière (8) et l'élément transmettant la lumière (8) est pourvu d'une encoche (7b) permettant la communication entre l'espace intérieur dans lequel est placée la source de lumière (4) et un espace extérieur.
